# EUROPEAN PATENT SPECIFICATION

(11) **EP 4 050 552 B1**
(45) Date of publication and mention of the grant of the patent: **13.11.2024**
(21) Application number: 21182536.9
(22) Date of filing: 29.06.2021
(51) Int. Cl.: G06T 1/20

(54) **METHOD AND APPARATUS FOR SEQUENCE PROCESSING, AND STORAGE MEDIUM**
VERFAHREN UND VORRICHTUNG ZUR SEQUENZVERARBEITUNG UND SPEICHERMEDIUM
PROCÉDÉ ET APPAREIL DE TRAITEMENT DE SÉQUENCES ET SUPPORT D'ENREGISTREMENT

(30) Priority: 26.02.2021 CN 202110221055
(43) Date of publication of application: 31.08.2022
(73) Proprietor: Beijing Xiaomi Mobile Software Co., Ltd., Beijing 100085 (CN)
(72) Inventor: POVEY, Daniel, Beijing, 100085 (CN); QIU, Haowen, Beijing, 100085 (CN)
(74) Representative: dompatent von Kreisler Selting Werner - Partnerschaft von Patent- und Rechtsanwälten mbB

(56) References cited:
- NATHAN BELL ET AL: "Implementing sparse matrix-vector multiplication on throughput-oriented processors", HIGH PERFORMANCE COMPUTING NETWORKING, STORAGE AND ANALYSIS, ACM, USA, 14 November 2009 (2009-11-14), pages 1 - 11, XP058111865
- PICHEL JUAN C ET AL: "Sparse Matrix Classification on Imbalanced Datasets Using Convolutional Neural Networks", IEEE ACCESS, vol. 7, 20 June 2019 (2019-06-20), pages 82377 - 82389, XP011733451, DOI: 10
- LANGR DANIEL ET AL: "Evaluation Criteria for Sparse Matrix Storage Formats", IEEE TRANSACTIONS ON PARALLEL AND DISTRIBUTED SYSTEMS, IEEE, USA, vol. 27, no. 2, 1 February 2016 (2016-02-01), pages 428 - 440, XP011593905

## Description

### BACKGROUND

A neural network can be regarded as a parameterized complex nonlinear function, and its parameters are usually arrays with data structures as tensors. Neural networks can be used to handle sequence processing tasks such as speech recognition, handwritten character recognition, and natural language processing. Due to the limited algorithms that can be performed by a graphics processing unit (GPU), the efficiency of processing sequences is low that when performing sequence recognition tasks a central processing unit (CPU) is used for processing. A document D1 discloses: "Implementing sparse matrix-vector multiplication on throughput-oriented processors" by N. 8ell Et Al (High Performance Computing Networking, Storage and Analysis, ACM, USA, pages 1-11 , XP058111865); a document D2 discloses: "Sparse Matrix Classification on Imbalanced Datasets Using Convolutional Neural Networks" by Pichel J Et Al (IEEE Access, vol. 7, pages 82377-82389, XP011733451), and a document D3 discloses: "Evaluation Criteria for Sparse Matrix Storage Formats" by Langr D Et A1 (IEEE Transactions on Parallel and Distributed Systems, IEEE, USA, vol. 27, no.2, pages 428-440, XP011593905).

### SUMMARY

In order to solve issues in the field of computer technologies, the present disclosure provides a sequence processing method, a sequence processing device, and a storage medium.

The invention is set in the appended set of claims. According to the first aspect of the present disclosure, a sequence processing method is provided which is applied to a graphics processor or graphics processing unit (GPU), where the sequence processing method includes: determining a sequence to be processed, which has an irregular tensor data structure; determining data structure information in the sequence to be processed, where the data structure information includes tensor dimensions and element information in tensors of each dimension; converting the irregular tensor data structure into a regular tensor data structure based on the tensor dimension and the element information; and processing the sequence to be processed based on the regular tensor data structure.

According to the second aspect of the present disclosure, there is provided a sequence processing apparatus, including: a memory device, configured to store processor-executable instructions; and a processor, configured to:determine a sequence to be processed, and determine data structure information in the sequence to be processed, wherein the sequence to be processed has an irregular tensor data structure, and the data structure information includes tensor dimensions and element information in tensors of each dimension; convert the irregular tensor data structure into a regular tensor data structure based on the tensor dimension and the element information; and process the sequence to be processed, based on the regular tensor data structure.

According to the third aspect of the present disclosure, there is provided a computer-readable storage medium having stored thereon instructions for execution by a processor to implement a sequence processing method , applied to a graphics processor, comprising: determining a sequence to be processed, which has an irregular tensor data structure; determining data structure information in the sequence to be processed, where the data structure information includes tensor dimensions and element information in tensors of each dimension; converting the irregular tensor data structure into a regular tensor data structure based on the tensor dimension and the element information; and processing the sequence to be processed based on the regular tensor data structure.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the disclosure and, together with the description, serve to explain the principles of the disclosure.
FIG. 1 is a flowchart showing a sequence processing method according to some embodiments.
FIG. 2 is a flowchart showing a data structure converting process according to some embodiments.
FIG. 3 is a flowchart showing a sequence processing method according to some embodiments.
FIG. 4 is a schematic diagram showing changes of a finite state acceptor FSA according to some embodiments.
FIG. 5 is a flowchart showing a sequence processing method according to some embodiments.
FIG. 6 is a flowchart showing a sequence processing method according to some embodiments.
FIG. 7 is a block diagram showing a sequence processing apparatus according to some embodiments.
FIG. 8 is a block diagram showing another sequence processing apparatus according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

In the field of machine learning and artificial intelligence, the neural network is trained through the machine learning tool system with sequence processing tasks such as speech recognition, handwritten character recognition, and natural language processing, and then relevant parameters in the neural network are adjusted such that the trained neural network can become the target model. The data structure of relevant parameters includes a tensor data structure. For example, the machine learning tool system may include the PyTorch system or the TensorFlow system.

Since GPU algorithms are not universal and only include related algorithms for processing regular tensor data structures, when performing sequence processing tasks, the sequence processing tasks to be executed by the GPU are transferred to the CPU for processing, and the algorithm in the CPU is used to perform the corresponding processing. After the CPU processing is completed, the CPU transfers the processing result to the GPU, and the GPU executes subsequent tasks. However, when processing in this way, sequence processing is too cumbersome, which affects its efficiency, so when related data is transferred between the CPU and GPU, the processing efficiency is likely to be too low, which in turn affects the user experience.

In view of this, the present disclosure provides a sequence processing method that can be applied to GPUs. For a sequence with an irregular tensor data structure, the irregular tensor data structure is converted into a regular tensor data structure, based on the data structure information included in the irregular tensor data structure. Based on the regular tensor data structure, the sequence to be processed is processed, and the ability of the GPU to process the sequence is optimized, such that the GPU is not restricted by the algorithm when executing the sequence processing task, thereby simplifying the sequence processing process and improving the efficiency of the GPU processing sequence.

In some examples, the sequence processing method provided by the present disclosure can be applied to any terminal that includes general-purpose graphical processing units (GPGPUs), and GPGPUs can also be understood as GPUs. In some embodiments, the types of terminals may include mobile terminals, such as mobile phones, tablets, smart TVs, smart speakers with screens, smart watches with screens, and iPods. In some other embodiments, the structure of the terminal may include a double-sided screen terminal, a folding screen terminal, a full-screen terminal, etc.

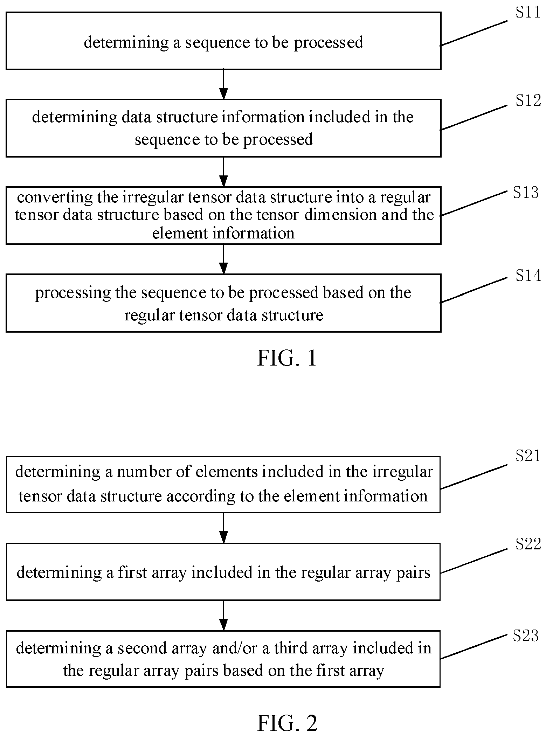

FIG. 1 is a flowchart showing a sequence processing method according to some embodiments. As shown in FIG. 1, the sequence processing method includes the following steps S11 to S14.

In step S11, the sequence to be processed is determined.

In some embodiments of the present disclosure, the data structure of the sequence may include a tensor data structure. Herein, the tensor data structure includes a regular tensor data structure and an irregular tensor data structure (Ragged Tensor). A tensor can be a multi-dimensional array, and the data types contained can be integers, floating-point numbers, and other representation types commonly used in computer processing. In the tensor data structure, the length of each dimension is determined. The irregular tensor data structure can be represented as a data structure with the concept of recursion. For example, an irregular tensor can be considered as a list of lists, and the list itself can also be a list of lists, thus dimensions of any length can be represented.

In some embodiments of the present disclosure, the relevant GPU can handle the regular tensor data structures. Therefore, in some embodiments of the present disclosure, processing is mainly performed on the sequence to be processed whose data structure is an irregular tensor data structure, and the sequence to be processed with an irregular tensor data structure is determined from multiple sequences input to the GPU.

In step S12, the data structure information included in the sequence to be processed is determined.

In some embodiments of the present disclosure, based on the above, the irregular tensor data structure is a multi-dimensional array. Through the irregular tensor data structure in the embodiments of the present disclosure, the data structure information included in the irregular tensor data structure can be determined. The data structure information may include tensor dimensions and element information included in the tensors of each dimension.

The GPU responds according to the sequence to be processed with the irregular tensor data structure, and determines the data structure information included in the irregular tensor data structure, so that when the data structure is converted, the targeted conversion can be performed.

In step S13, the irregular tensor data structure is converted into a regular tensor data structure, based on the tensor dimension and element information.

In embodiments of the present disclosure, based on the tensor dimension, the total number of elements included in the irregular tensor data structure can be determined. For example, with a 3-dimensional tensor data structure, if its dimension is 5*8*20, it represents that the tensor data structure includes a total of 5*8*20=800 elements. Based on the element information, the element value corresponding to each element, the row position of each element, and the number of elements can be determined. Herein, the number of elements is represented as the number of non-empty elements included in the irregular tensor data structure. In the process of converting an irregular tensor data structure into a regular tensor data structure, the number of elements included in the tensor data structure, the element value corresponding to each element and the row position of each element can be determined based on the tensor dimensions and element information included in the irregular tensor data structure, such that the sequence to be processed whose data structure is an irregular data structure can be expressed on the GPU, so that when the data structure is converted, the targeted conversion can be performed.

In step S 14, the sequence to be processed is processed based on the regular tensor data structure.

In some embodiments of the present disclosure, through the basic operation algorithm related to the regular tensor data structure included in the GPU, the sequence to be processed whose data structure has become the regular tensor data structure is processed correspondingly such that when the GPU processes the sequence to be processed which has the irregular tensor data structure, a quick process can be performed without being transferred to the CPU for processing.

Through the above embodiments, when processing the sequence to be processed by the GPU, the sequence to be processed whose data structure is the irregular tensor structure can be converted into a corresponding regular tensor data structure in advance according to the data structure information included, such that when the GPU processes the sequence to be processed, the impact of the data structure of the sequence to be processed can be avoided or reduced, thereby enhancing the ability of the GPU to process the sequence. In addition, when processing the sequence to be processed with the irregular tensor structure, there is no need to transfer the sequence to the CPU, thereby avoiding the possibility of related data being contaminated during the transferring process, and keeping the data clean.

In some embodiments, in the process of converting an irregular tensor data structure into a regular tensor data structure, the number of corresponding regular data pairs can be determined according to the tensor dimension of the irregular tensor data structure. Based on the element information, the irregular tensor data structure is converted. Due to the irregular tensor data structure, multi-dimensional elements may appear in the same row of elements. In order to represent the correlation between the elements of respective dimensions, in the embodiments of the present disclosure, the data characteristics of the irregular tensor data structure can be determined, and the irregular tensor data structure can be converted into corresponding regular array pairs to represent an irregular tensor data structure through the regular array pairs. That is, when the irregular tensor data structure includes N tensor dimensions, based on element information, the irregular tensor data structure is converted into N-1 regular array pairs. The irregular tensor data structure is regularized for dimensionality reduction such that the GPU can determine the correlation between the respective dimensional elements when processing the sequence to be processed, and quickly determine the data characteristics of the sequence to be processed, thereby facilitating to quickly perform processing to improve processing efficiency. For example, if the irregular tensor data structure includes 2 tensor dimensions, the irregular tensor data structure is converted into a regular array pair. If the irregular tensor data structure includes 4 tensor dimensions, the irregular tensor data structure is converted into 3 regular array pairs.

In some other embodiments, for the data structure of the N-dimensional irregular tensor in some embodiments of the present disclosure, the irregular tensor data structure is converted into N-1 regular array pairs, based on element information. FIG. 2 is a flowchart showing a data structure converting process according to some embodiments.

In step S21, a number of elements included in the irregular tensor data structure is determined according to the element information.

In some embodiments of the present disclosure, according to the element information, it is possible to determine the element value corresponding to all the lowest-level elements contained in the irregular tensor data structure, the row position of each element, and the number of elements. The number of elements can be represented as the total number of elements included in the irregular tensor data structure. Through the number of elements, the length of the first array corresponding to the irregular tensor data structure can be determined, such that the converting can be performed quickly during converting. Herein, the element values in the first array are elements included in the irregular tensor data structure, and the array length of the first array is the number of elements included in the irregular tensor data structure.

In step S22, the first array included in the regular array pairs is determined.

In some embodiments of the present disclosure, the first array is used to represent all the lowest-level elements contained in the irregular tensor data structure. In the process of converting the irregular tensor data structure to the regular tensor data structure, the length of the first array is determined according to the determined number of elements, and then the respective lowest-level elements are collected to obtain the first array included in the regular array pairs.

In some possible implementation scenarios, taking the two-dimensional irregular tensor data structure as an example, the sequence to be processed is [ [2 4] [8] [ ] [6 1] ]. According to the lowest-level contained elements being 2, 4, 8, 6, 1, and the determined number of elements being 5, it can be seen that in the first array, the values of the contained elements are 2, 4, 8, 6, 1. Respectively, the length of the first array is 5, that is, the determined first array is [2 4 8 6 1]. In an example, the values array can be used to represent the first array.

In step S23, the second array and/or the third array included in the regular array pairs are determined based on the first array.

In embodiments of the present disclosure, the regular data pairs may include at least one of the first array, the second array, and the third array, that is, the regular data pairs may include the following forms: the first array and the second array, the first array and the third array, and the first array, the second array and the third array. There can be multiple rays included in each type. The more arrays the regular array pairs include, the more complete the relationship between the respective elements is expressed with the irregular tensor data structure.

The second array is used to represent the row information of each element included in the first array in the irregular tensor data structure. That is, through the second array, a specific row position to which each element of the first array belongs in the irregular tensor data structure can be determined. Through the determined row position of each element in the first array, the second array corresponding to the irregular tensor data structure can be determined. In some possible implementation scenarios, if the first array is [2 4 8 6 1], 2 and 4 are elements of the 0^{th} row in the irregular tensor data structure, 8 is the element of the first row in the irregular tensor data structure, and 6 and 1 are the elements of the third row in the irregular tensor data structure, the determined second array is [0 0 1 3 3]. In an example, the row_ids array can be used to represent the second array.

The third array is used to represent the array length of the first array and starting position of the elements contained in each row of the irregular tensor data structure. That is, the length of the third array can be understood as one more than the number of rows in the irregular tensor data structure. The third array can be used to determine the row position of the starting element of each row in the first array and the number of elements included in the irregular tensor data structure. In some embodiments, row splits arrays can be used to represent the third array. The third array can be determined by the row position of the starting element of each row in the first array and the number of elements included in the irregular tensor data structure. In some implementation examples, the element corresponding to the last element value in the third array is the number of elements, and the difference between the remaining adjacent elements can represent the number of elements included in previous rows. For example, if row _splits[2]-row _splits[1]=3-2=1, in the third array, the element value corresponding to the second row is 3, and the element value corresponding to the first row is 2. The difference between the elements in the second row and the first row is 1, which means that in the irregular tensor data structure, the row position of the starting element in the second row and the row position of the starting element in the first row in the first array differ by 1, so the first row includes 1 element. If row _splits[3]-row_splits[2]=6-2=4, in the third array, the element value corresponding to the third row is 6, and the element value corresponding to the second row is 2. The difference between the elements in the third row and the second row is 4, which means that in the irregular tensor data structure, the row position of the starting element in the third row and the row position of the starting element in the second row in the first array differ by 4, so the second row includes 4 elements. In some implementation scenarios, if the first array is [2 4 8 6 1], 2 is the starting element of the 0^{th} row, 8 is the starting element of the first row, 6 is the starting element of the second row, 1 is the starting element of the third row, and the number of elements is 5, then the third array obtained after converting the irregular tensor data structure is [0 2 3 4 5].

In some embodiments, when the second array is determined based on the first array, the row value of each element in the irregular tensor data structure can be determined respectively according to the elements contained in the first array, and the corresponding row position of each element in the first array in the irregular tensor data structure is determined respectively. The row value corresponding to each element in the first array is used as the element value corresponding to each row in the second array to form a second array whose array length is the number of elements included in the irregular tensor data structure. A second array with the same length as the first array is obtained, and each element value in the second array corresponds to each element value in the first array. In some implementation scenarios, if the first array corresponding to the irregular tensor data structure is [2 4 8 6 1], where the number of rows corresponding to 2 and 4 is the 0^{th} row, the number of rows corresponding to 8 is the first row, and the number of rows corresponding to 6 and 1 is the third row, then, the second data is [0 0 1 3 3].

In some other embodiments, when the third array is determined based on the first array, according to the data structure information of the irregular tensor data structure, the row starting element in each row of the irregular tensor data structure can be determined. According to the first array, the row value corresponding to each row starting element in the first array can be determined, and then the row value corresponding to the row starting element in the first array is used as the element value included in the third array in the order of rows, and the array length of the first array is used as the last element value of the third array. In some implementation scenarios, if the number of rows of the irregular tensor data structure is 3, the row starting element of the 0^{th} row is 4, the row starting element of the first row is 6, and the row starting element of the second row is 3. According to the first array being [4 7 5 6 2 8 3], the corresponding row value of 4 in the first array is 0, the row value of 6 in the first array is 3, and the row value of 3 is in the first array is 6. The array length of the first array is 7, so the last element value of the third array is 7. The third array is determined as [0 3 6 7].

In some examples, in response to the row starting element corresponding to the current row in the third array being empty, the element value of the adjacent row in the third array becomes the element value of the current row. That is, in the irregular tensor data structure, if the row starting element of a certain row is empty, the element value corresponding to the previous row or the next row can be used as the element value corresponding to the third array.

In some implementation scenarios, if the number of rows of the irregular tensor data structure is 3, the row starting element of the 0^{th} row is 4, the row starting element of the first row is empty, and the row starting element of the second row is 6. In the third array, the last element value corresponds to the data length of the first array, and the difference between the remaining adjacent elements can represent the number of elements included in each previous row. It can be known, from the first array being [4 7 5 6 2 8 3], that the corresponding row value of 4 in the first array is 0, the corresponding row value of 6 in the first array is 3, and the array length of the first array is 7, the element value corresponding to the row starting element of the second row in the third array can be used as the element value corresponding to the row starting element of the first row in the third array, and the last element value of the third array is 7. The third array is determined as [0 3 3 7].

In some embodiments, the third array may be determined by the first array and second array. The element information corresponding to the irregular tensor data structure is determined through the value of each element in the first array. Through the value of each element in the second array, the row information to which each element contained in the irregular tensor data structure belongs is determined. According to the meaning represented by each element value in the first array and the second array, the third array can be determined.

In yet other examples, the second array may be obtained based on the determined first array and third array. The element information corresponding to the irregular tensor data structure is determined through the value of each element in the first array. The starting position of the element contained in each row of the irregular tensor data structure in the first array is determined by the value of each element in the third array, and then the second array can be determined according to the respective elements contained in the first array. In some implementation scenarios, if the first array is [2 4 8 6 1], and the third array is [0 2 3 3 5], it can be determined that the number of rows of the irregular tensor data is 4, the number of elements is 5, 2 is the starting element of the 0^{th} row, 8 is the starting element of the first row, empty is the starting element of the second row, 6 is the starting element of the third row, and the corresponding second array obtained is [0 0 1 3 3 ].

In other examples, in the process of converting an irregular tensor data structure to a regular tensor data structure, the first array, the second array, and the third array can be directly obtained based on the tensor dimension and element information.

Based on a similar concept, the embodiments of the present disclosure also provide some basic operation algorithms applied to the GPU, such that the GPU can quickly process the irregular tensor data structure according to the algorithm and convert the irregular tensor data structure into required regular tensor data structure. The basic operation algorithm can include: RowSplitsToRowIds, where the row splits array is given to calculate the corresponding row_ids array; RowIdsToRowSplits, where the row_ids array and the number of rows are given to calculate the corresponding row splits array; ExclusiveSum (exclusive sum), where the exclusive-sum of the specified regular array is calculated, an example being the regular array is specified as [1 2 1 3] and its corresponding exclusive-sum array is [0 1 3 4], wherein, the exclusive-sum of each position in the original specified regular array does not include the element at its current position, for example, in the third row of the specified regular array, its current position element is 3, and its exclusive-sum value is 1 + 2 + 1 = 4, which does not include the current position element 3; SegmentedReduce, where a 2-dimensional irregular tensor data structure is given to calculate a Reduce value of each row, where Reduce is a binary operation, such as summation or maximum value and so on, and taking the Reduce operation as the summation as an example, SegmentedReduce means calculating the sum of elements of each row in an irregular tensor data structure, for example, for an irregular tensor data structure [ [1 2] [3] [5 1 3] ], its SegmentedReduce value (assuming that the Reduce operation is a summation) is [3 3 9]; and SegmentedSort, where a 2-dimensional irregular tensor data structure is given to sort the elements of each row according to the given comparison operator, for example, when assuming that Ragged Tensor [ [1 0] [3] [5 1 3] ] is sorted in ascending order, its value is [ [0 1] [3] [1 3 5] ]. In an example, when SegmentedReduce and SegmentedSort process an irregular tensor data structure, the tensor dimension of the irregular tensor data structure may not be restricted. In some implementation scenarios, the above-mentioned basic operation algorithm can be implemented using a productivity library for general-purpose computing, which is open sourced by GPUs such as moderngpu, cub, etc.

In related fields, when the GPU performs sequence processing related tasks, it can only process task groups with regular lengths, such as a task group with 1000 subtasks or 100*500 subtasks. Furthermore, when writing parallel code of GPU, a multi-layer loop code is usually used, causing time-consuming and low processing efficiency when the GPU runs according to the parallel code. Also, because the number of elements in each row of the irregular tensor data structure is different, the multi-layer loop coding method is adopted, and it cannot be converted into parallel code that can be used by the GPU.

In view of this, in some embodiments of the present disclosure, based on the above-mentioned basic operation algorithms, it is possible to convert the irregular tensor data structure into a one-dimensional regular array when programming in the GPU based on the irregular tensor data structure, such that when programming, the structure can be avoided or cycled to reduce the complexity of code writing, and the obtained code can be quickly converted into the parallel code that the GPU can run, thus improving the efficiency that GPU implements the related algorithms for the irregular tensor data structures.

In some implementation scenarios, taking a two-dimensional irregular tensor data structure as an example, the following code can be used for programming when calculating the modulo of the row number corresponding to each element in the irregular tensor data structure: 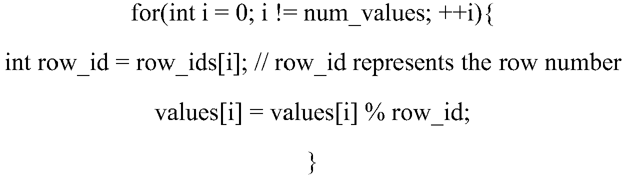 where i represents the row value corresponding to each element in the first array.

In other implementation scenarios, when programming based on irregular tensor data structures in GPU, one-dimensional regular arrays converted from the irregular tensor data structures and basic operation algorithms can also be quickly converted into the parallel code to be able to execute any of the following parallel instructions: Append, splicing a set of Ragged Tensor; Stack, stacking a set of Ragged Tensors with dimension n to form an irregular tensor data structure with dimension n+1, that is, for ans[i,j,k,l] = srcs[i][j,k,l], it is assumed that srcs is an input set of Ragged Tensor, and the dimension of each srcs[i] is 3, ans is the result of Stack; ChangeSublistSizes, changing the number of elements in each row of the input irregular tensor data structure; Prefix, getting the first n rows of the input irregular tensor data structure; RemoveAxis, removing the specified dimension in the irregular tensor data structure; Unsqueeze, adding a dimension to Ragged Tensor; Transpose, transposing the irregular tensor data structure; SubsampleRagged, retaining the specified elements in the irregular tensor data structure, and deleting the remaining elements; Index, getting a specified row in the irregular tensor data structure; RemoveValuesEq, removing all elements which are equal to a certain value in the irregular tensor data structure; RemoveValuesLeq, removing all elements in the irregular tensor data structure which are less than or equal to a certain value; and ComputeHash, calculating the Hash value of elements in each row in the irregular tensor data structure.

Based on the same concept, the embodiments of the present disclosure also provide another sequence processing method.

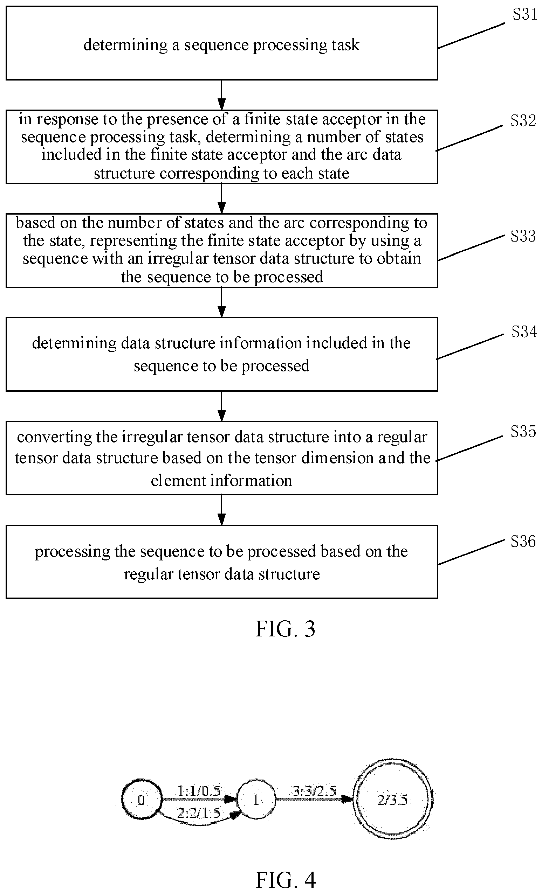

FIG. 3 is a flowchart showing a sequence processing method according to some embodiments. As shown in FIG. 3, the sequence processing method includes the following steps S31 to S36.

In step S31, a sequence processing task is determined.

In some embodiments of the present disclosure, in order to better clarify the processing required by the sequence to be processed, the sequence processing tasks that the GPU currently needs to perform are determined. Herein, the sequence processing task is a task that the graphics processor is controlled to perform sequence processing. In an example, the sequence processing task may include a sequence recognition task. For example, sequence recognition tasks can include tasks such as speech recognition, handwritten character recognition, natural language processing, etc.

In step S32, in response to the presence of a finite state acceptor in the sequence processing task, the number of states included in the finite state acceptor and the arc data structure corresponding to each state are determined.

In some embodiments of the present disclosure, when the GPU determines that there is a finite state acceptor in the sequence processing task according to the response, the number of states included in the finite state acceptor, and arc data structure corresponding to each state can be determined according to the existing finite state acceptor.

The finite state acceptor (FSA) is composed of a set of finite states and state transitions, each of which has at least one label. The finite state acceptor FSA may include: a weighted finite state acceptor (WFSA), where there is a weight for each state transition. That is, in each initial state, the initial weight is included, and in each termination state, the termination weight is included, and the weight can be represented as the probability or loss of the transition or the initial/termination state, and is accumulated along each path and accumulated in different paths. The finite state acceptor FSA is a directed graph. For example, in the change diagram of the finite state acceptor FSA shown in FIG. 4, for each state of the finite state acceptor FSA (each node in the directed graph), it can include arcs with unequal numbers taking this state as the starting point and point to other states, and then according to the change process of each state and the corresponding weight, can determine the arc data structure corresponding to each state. According to the number of rows contained in the irregular tensor data structure, the number of states of the finite state acceptor FSA can be determined.

In step S33, based on the number of states and the arcs corresponding to the states, the finite state acceptor is represented by using a sequence with an irregular tensor data structure to obtain the sequence to be processed.

In some embodiments of the present disclosure, the finite state acceptor can be represented by a sequence of irregular tensor data structures. Based on the number of states in the finite state acceptor FSA, the number of rows in the irregular tensor data structure can be determined, and the elements included in each row are determined based on the arc data structure in the state. In some implementation scenarios, as shown in FIG. 4, based on the number of states and the arcs corresponding to the states, the following sequence of the irregular tensor data structure is obtained:
row_splits array: [0, 2, 3, 3]
row_ids array: [0, 0, 1]
values array: [Arc{0,1,1,0,5}, Arc{0,1,2,1.5},Arc{ 1,2,3,2.5}].
where Arc can represent the state change process of the arc and the corresponding weight.

In step S34, the data structure information included in the sequence to be processed is determined.

In step S35, based on the tensor dimension and element information, the irregular tensor data structure is converted into a regular tensor data structure.

In step S36, the sequence to be processed is processed based on the regular tensor data structure.

In some embodiments, the data structure of the arc may include the starting state, target state, input label, and label weight of the current arc, and the starting state, target state, input label, and label weight are determined as the elements included in each row of the arc data structure. In some implementation scenarios, for example Arc {0,1,1,0.5 }, it indicates that the starting state is 0, the target state is 1, the input label is 1, and the weight is 0.5 for the arc.

In another embodiment, the present disclosure also provides another sequence processing method, which can represent finite state transducers (FST) based on an irregular tensor data structure, such that the finite state transducer FST can be applied on GPU in the form of the irregular tensor data structure to realize the derivability of the irregular tensor data structure.

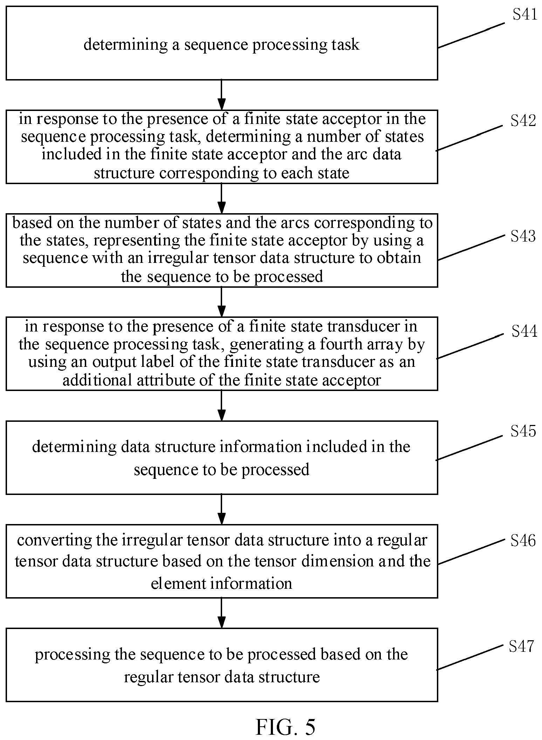

FIG. 5 is a flowchart showing a sequence processing method according to some embodiments. As shown in FIG. 5, the sequence processing method includes the following steps S41 to S47.

In step S41, the sequence processing task is determined.

In step S42, in response to the presence of a finite state acceptor in the sequence processing task, the number of states included in the finite state acceptor and the arc data structure corresponding to each state are determined.

In step S43, based on the number of states and the arcs corresponding to the states, the finite state acceptor is represented by using a sequence with an irregular tensor data structure to obtain the sequence to be processed.

In step S44, in response to the presence of the finite state transducer in the sequence processing task, a fourth array is generated by using the output label of the finite state transducer as an additional attribute of the finite state acceptor.

In some embodiments of the present disclosure, the finite state transducer (FST) is a finite state acceptor FSA, and in addition to the data included in the finite state acceptor FSA, it also includes an output label. In response to the presence of a finite state transducer in the sequence processing task, the output label of the finite state transducer is used as an additional attribute of the finite state acceptor to generate a fourth array. Herein, the number of elements included in the fourth array is the same as the number of arc data structures included in the state acceptor. In some examples, each element in the output label may correspond to each element in the input label. For example, if the values array of the finite state acceptor FSA is [Arc{0,1,1,0,5}, Arc{0,1,2,1.5}, Arc{1,2,3,2.5}], then the corresponding output label is stored as an array [1,2,3].

In step S45, the data structure information included in the sequence to be processed is determined.

In step S46, the irregular tensor data structure is converted into a regular tensor data structure based on the tensor dimension and element information.

In step S47, the sequence to be processed is processed based on the regular tensor data structure.

In some embodiments, the additional attributes can facilitate to realize the derivability of the finite state transducer FST, and the array pairs converted based on the irregular tensor data structure can facilitate the GPU to quickly perform related operations of sequence processing, thus improving the processing power of the GPU, and improving the processing effect. In some embodiments, the additional attributes may also include the following multiple attributes: TopSort, performing topological sorting on the finite state transducer FST; ArcSort, sorting the output arcs of each state in the finite state transducer FST; Intersection, an intersection algorithm of two FSTs; RemoveEpsilon, removing the Epsilon (usually represented by 0) label in the finite state transducer FST; ShortestPath, calculating the shortest path (from the initial state to the end state) in the finite state transducer FST; Closure, the closure algorithm of finite state transducer FST; and Invert, which is an inversion algorithm of the finite state transducer FST.

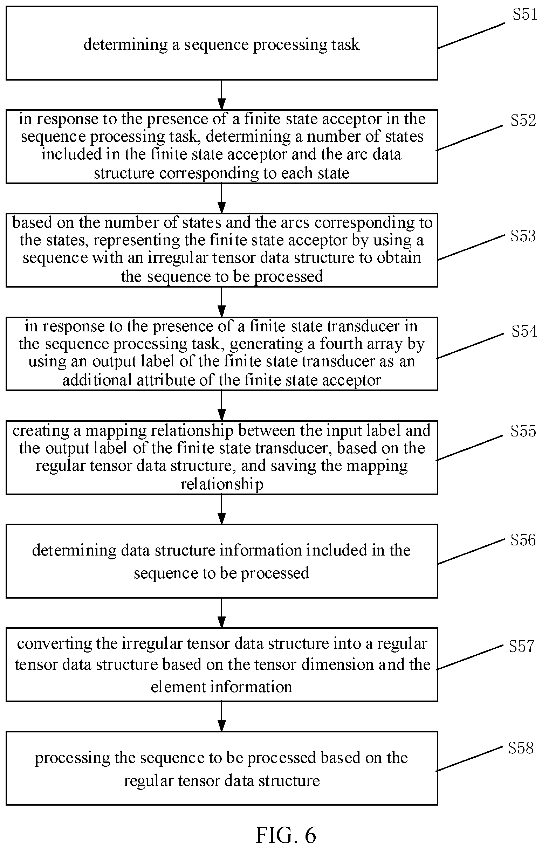

In another embodiment, FIG. 6 is a flowchart showing a sequence processing method according to some embodiments. As shown in FIG. 6, the sequence processing method includes the following steps S51 to S58.

In step S51, the sequence processing task is determined.

In step S52, in response to the presence of a finite state acceptor in the sequence processing task, the number of states included in the finite state acceptor and the arc data structure corresponding to each state are determined.

In step S53, based on the number of states and the arcs corresponding to the states, the finite state acceptor is represented by using a sequence with an irregular tensor data structure to obtain the sequence to be processed.

In step S54, in response to the presence of the finite state transducer in the sequence processing task, a fourth array is generated by using the output label of the finite state transducer as an additional attribute of the finite state acceptor.

In step S55, a mapping relationship based on the regular tensor data structure between the input label and the output label of the finite state transducer is created, and the mapping relationship is saved.

In some embodiments of the present disclosure, in order to facilitate the realization of the derivability of the finite state transducer FST, a mapping relationship based on the regular tensor data structure between the input label and the output label of the finite state transducer is created, and the mapping relationship is saved. Through this kind of mapping relationship, the gradient on the arc of the output finite state transducer FST can be back propagated to the output FST.

In step S56, the data structure information included in the sequence to be processed is determined.

In step S57, the irregular tensor data structure is converted into a regular tensor data structure based on the tensor dimension and element information.

In step S58, the sequence to be processed is processed based on the regular tensor data structure.

Through any of the above sequence processing methods, the irregular tensor data structure can be easily used to process any irregular tasks on the GPU. Further, based on the provided related operation algorithms and regularized converting of data structures, it is helpful to design and implement algorithms related to finite state acceptors related to irregular tensor data structures on the GPU to improve the practicability of the GPU.

In some implementation scenarios, based on any of the above sequence processing methods, the decoding task of processing speech recognition-related sequences in the GPU can be implemented.

Based on the same concept, the embodiments of the present disclosure also provide a sequence processing apparatus applied to a graphics processor.

It can be understood that, in order to implement the above-mentioned functions, the sequence processing apparatus provided by the embodiments of the present disclosure includes hardware structures and/or software modules corresponding to each function. In combination with the units and algorithm steps of the examples disclosed in some embodiments of the present disclosure, the embodiments of the present disclosure can be implemented in the form of hardware or a combination of hardware and computer software. Whether a certain function is executed by hardware or computer software-driven hardware depends on the specific application and design constraint conditions of the technical solution. Those skilled in technologies can use different methods for each specific application to implement the described functions, but such implementation should not be considered as going beyond the scope of the technical solutions of the embodiments of the present disclosure.

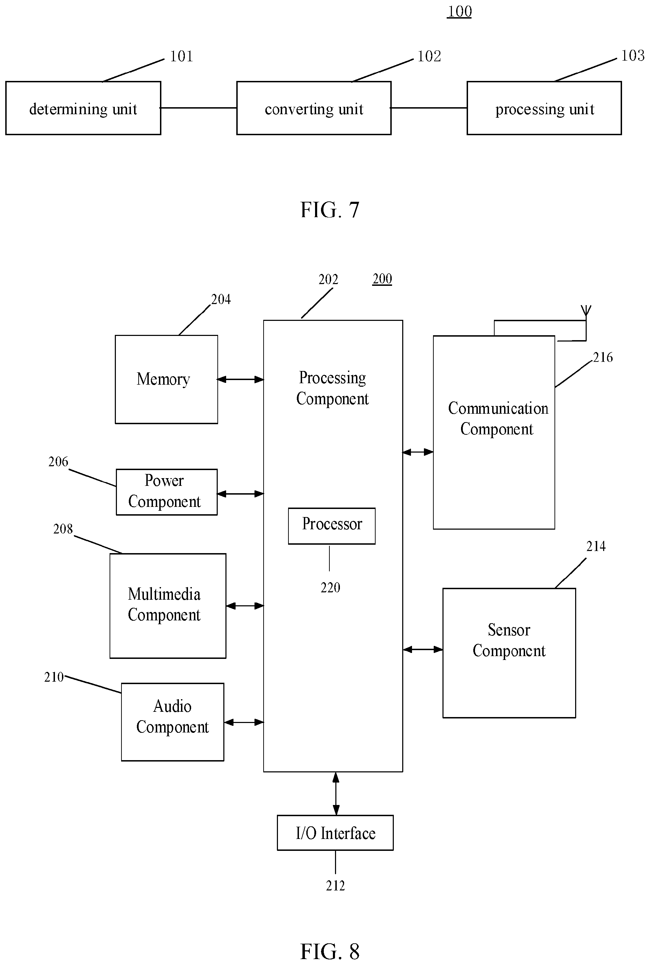

FIG. 7 is a block diagram showing a sequence processing apparatus according to some embodiments. Referring to FIG. 7, the sequence processing apparatus 100 includes a determining unit 101, a converting unit 102 and a processing unit 103.

The determining unit 101 is configured to determine the sequence to be processed and determine the data structure information included in the sequence to be processed, wherein the sequence to be processed has an irregular tensor data structure, and the data structure information includes tensor dimensions, and element information is included in the tensor of each dimension.

The converting unit 102 is configured to convert an irregular tensor data structure into a regular tensor data structure based on the tensor dimension and element information.

The processing unit 103 is configured to process the sequence to be processed based on the regular tensor data structure.

In an embodiment, the converting unit 102 is configured to convert the irregular tensor data structure into a regular tensor data structure based on the tensor dimension and element information in the following manner: in response to the irregular tensor data structure including N tensor dimensions, converting the irregular tensor data structure into N-1 regular array pairs based on the element information.

In another embodiment, the converting unit 102 is configured to convert the irregular tensor data structure into N-1 regular array pairs based on element information in the following manner: determining a number of elements included in the irregular tensor data structure according to the element information; determining a first array included in the regular array pairs, the element values in the first array being elements included in the irregular tensor data structure, and an array length of the first array being the number of elements included in the irregular tensor data structure; and determining a second array and/or a third array included in the regular array pairs based on the first array, where the second array is used to represent row information of each of the elements included in the first array in the irregular tensor data structure; and the third array is used to represent the starting position of the elements contained in each row of the irregular tensor data structure in the first array, and the array length of the first array.

In another embodiment, the converting unit 102 is configured to determine the second array included in the regular array pair based on the first array in the following manner: determining a row value to which each element value in the first array belongs in the irregular tensor data structure; and using the row value as the element value corresponding to each row in the second array to form a second array whose array length is the number of elements included in the irregular tensor data structure.

In another embodiment, the converting unit 102 is configured to determine the third array included in the regular array pairs based on the first array in the following manner: determining a row starting element in each row in the irregular tensor data structure, and determining the row value corresponding to the row starting element in the first array; and using the row value corresponding to the row starting element in the first array as the element value included in the third array in order of rows, and using the array length of the first array as the last element value of the third array.

In another embodiment, if the row starting element corresponding to the current row in the third array is empty, the element value of an adjacent row in the third array is used as the element value of the current row.

In another embodiment, before determining the sequence to be processed, the determining unit 101 is further configured to: determine a sequence processing task, and the sequence processing task is a task for controlling the graphics processor to perform sequence processing. The determining unit 101 is configured to determine the sequence to be processed in the following manner: in response to the presence of a finite state acceptor in the sequence processing task, determining a number of states included in the finite state acceptor and the arc data structure corresponding to each state; and based on the number of states and the arc corresponding to the state, representing the finite state acceptor by using a sequence with an irregular tensor data structure to obtain the sequence to be processed. Herein, the number of rows in the irregular tensor data structure is determined by the number of states, and the elements included in each row are determined based on the arc data structure in the state.

In another embodiment, the elements included in each row are determined based on the arc data structure in the state in the following manner: determining a starting state, a target state, an input label, and a label weight included in the arc data structure as the elements included in each row.

In yet another embodiment, the converting unit 102 is further configured to: in response to the presence of a finite state transducer in the sequence processing task, generate a fourth array by using an output label of the finite state transducer as an additional attribute of the finite state acceptor. The number of elements included in the fourth array is the same as the number of arc data structures included in the state acceptor.

In yet another embodiment, the sequence processing apparatus further includes: a creating unit configured to create a mapping relationship between the input label and the output label of the finite state transducer, based on the regular tensor data structure, and save the mapping relationship.

With respect to the apparatuses in the above embodiments, the specific manners for performing operations for individual modules therein have been described in detail in the embodiments regarding the methods, which will not be elaborated.

FIG. 8 is a block diagram showing another sequence processing device according to some embodiments. For example, the sequence processing device 200 can be a mobile phone, a computer, a digital broadcast terminal, a messaging device, a gaming console, a tablet, a medical device, exercise equipment, a personal digital assistant, etc.

Referring to FIG. 8, the sequence processing device 200 can include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the sequence processing device 200, such as the operations associated with display, telephone calls, data communications, camera operations, and recording operations. The processing component 202 can include one or more processors 220 to execute instructions to perform all or part of the steps in the described methods above. Moreover, the processing component 202 can include one or more modules which facilitates the interaction between the processing component 202 and other components. For instance, the processing component 202 can include a multimedia module to facilitate the interaction between the multimedia component 208 and the processing component 202.

The memory 204 is configured to store various types of data to support the operation of the sequence processing device 200. Examples of such data include instructions for any applications or methods operated on the sequence processing device 200, contact data, phonebook data, messages, pictures, video, etc. The memory 204 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 provides power to various components of the sequence processing device 200. The power component 206 can include a power management system, one or more power sources, and any other components associated with the generation, management, and distribution of power in the sequence processing device 200.

The multimedia component 208 includes a screen providing an output interface between the sequence processing device 200 and the user. In some embodiments, the screen can include a liquid crystal display (LCD) and a touch panel (TP). In some implementations, an organic light-emitting diode (OLED) display can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and pressure associated with the touch or swipe action. In some embodiments, the multimedia component 208 includes a front camera and/or a rear camera. The front camera and/or the rear camera can receive an external multimedia datum while the sequence processing device 200 is in an operation mode, such as a photographing mode or a video mode. Each of the front camera and the rear camera can be a fixed optical lens system or have focus and optical zoom capability.

The audio component 210 is configured to output and/or input audio signals. For example, the audio component 210 includes a microphone ("MIC") configured to receive an external audio signal when the sequence processing device 200 is in an operation mode, such as a call mode, a recording mode, and a voice recognition mode. The received audio signal can be further stored in the memory 204 or transmitted via the communication component 216. In some embodiments, the audio component 210 further includes a speaker to output audio signals.

The I/O interface 212 provides an interface between the processing component 202 and peripheral interface modules, such as a keyboard, a click wheel, buttons, etc. The buttons can include, but are not limited to, a home button, a volume button, a starting button, and a locking button.

The sensor component 214 includes one or more sensors to provide status assessments of various aspects of the sequence processing device 200. For instance, the sensor component 214 can detect an open/closed status of the sequence processing device 200, relative positioning of components, e.g., the display and the keypad, of the sequence processing device 200, a change in position of the sequence processing device 200 or a component of the sequence processing device 200, a presence or absence of user contact with the sequence processing device 200, an orientation or an acceleration/deceleration of the sequence processing device 200, and a change in temperature of the sequence processing device 200. The sensor component 214 can include a proximity sensor configured to detect the presence of nearby objects without any physical contact. The sensor component 214 can also include a light sensor, such as a CMOS or CCD image sensor, for use in imaging applications. In some embodiments, the sensor component 214 can also include an accelerometer sensor, a gyroscope sensor, a magnetic sensor, a pressure sensor, or a temperature sensor.

The communication component 216 is configured to facilitate wired or wireless communication between the sequence processing device 200 and other devices. The sequence processing device 200 can access a wireless network based on a communication standard, such as Wi-Fi, 2G, 3G, 4G, or 5G or a combination thereof. In some embodiments, the communication component 216 receives a broadcast signal or broadcast associated information from an external broadcast management system via a broadcast channel. In one exemplary embodiment, the communication component 216 includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the sequence processing device 200 can be implemented with one or more application specific integrated circuits (ASICs), digital signal processors (DSPs), digital signal processing sequence processing devices (DSPDs), programmable logic sequence processing devices (PLDs), field programmable gate arrays (FPGAs), controllers, micro-controllers, microprocessors, or other electronic components, for performing any of the sequence processing methods described above.

In exemplary embodiments, there is also provided a non-transitory computer-readable storage medium including instructions, such as included in the memory 204, executable by the processor 220 in the sequence processing device 200, for performing the above-described methods. For example, the non-transitory computer-readable storage medium can be a ROM, a random access memory (RAM), a CD-ROM, a magnetic tape, a floppy disc, an optical data storage sequence processing device, etc.

It can be further understood that in the present disclosure, "multiple" refers to two or more, and other quantifiers are similar. "And/or" describes the relationship of the associated objects, indicating that there can be three types of relationships, for example, A and/or B may indicate three cases: A exists alone, A and B exist simultaneously, and B exists alone. The character "/" generally indicates that the associated objects before and after are in an "or" relationship. The singular forms "a", "an", "said" and "the" are also intended to include plural forms, unless the context clearly indicates other meanings.

It can be further understood that the terms "first", "second", etc. are used to describe various information, but the information should not be limited to these terms. These terms are only used to distinguish the same type of information from each other, and do not indicate a specific order or degree of importance. In fact, expressions such as "first" and "second" can be used interchangeably. For example, without departing from the scope of the present disclosure, the first information may also be referred to as second information, and similarly, the second information may also be referred to as first information.

It can be further understood that, unless otherwise specified, "connection" includes a direct connection between the two without other components, and also includes an indirect connection between the two with other elements.

It can be further understood that, although the operations are described in a specific order in the drawings in some embodiments of the present disclosure, they should not be understood as requiring these operations to be performed in the specific order shown or in a serial order, or requiring all the shown operations to be performed to obtain the desired result. In certain circumstances, multitasking and parallel processing may be advantageous.

Various embodiments of the present disclosure can have one or more of the following advantages.

Through the method provided by the present disclosure, in the case that the sequence to be processed has an irregular tensor data structure, the irregular tensor data structure is converted into a regular tensor data structure according to the data structure information included in the irregular tensor data structure, such that GPU can quickly process the sequence to be processed which is converted into the regular tensor data structure and optimize the ability of GPU to process the sequence, so as to speed up the processing process and improve the efficiency of GPU to process the sequence.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

## Claims

1. A sequence processing method, applied to a graphics processor, **characterized in that** the method comprises:
determining (S1 1) a sequence having an irregular tensor data structure as a sequence to be processed;
determining (S12) data structure information in the sequence to be processed, where the data structure information includes tensor dimensions and element information in tensors of each dimension;
converting (S13) the irregular tensor data structure into a regular tensor data structure based on the tensor dimension and the element information; and
processing (S14) the sequence to be processed based on the regular tensor data structure;
wherein said converting (S13) the irregular tensor data structure into a regular tensor data structure based on the tensor dimension and the element information comprises:
when the irregular tensor data structure includes N tensor dimensions, converting the irregular tensor data structure into N-1 regular array pairs based on the element information.

2. The sequence processing method according to claim 1, wherein each regular array pair includes a first array, and at least one of a second array and a third array wherein said converting the irregular tensor data structure into N-1 regular array pairs based on the element information comprises:
determining (S21) a number of elements in the irregular tensor data structure according to the element information;
determining (S22) the first array in the regular array pairs, element values in the first array being elements in the irregular tensor data structure, and an array length of the first array being the number of elements in the irregular tensor data structure; and
determining (S23) the second array and/or the third array in the regular array pairs based on the first array,
wherein, the second array is used to represent row information to which each of the elements in the first array belongs in the irregular tensor data structure; and
the third array is used to represent a starting position of the elements in each row of the irregular tensor data structure in the first array, and the array length of the first array.

3. The sequence processing method according to claim 2, wherein said determining (S23) the second array in the regular array pairs based on the first array comprises:
determining a row value to which each element value in the first array belongs in the irregular tensor data structure; and
using the row value as the element value corresponding to each row in the second array to form a second array whose array length is the number of elements in the irregular tensor data structure.

4. The sequence processing method according to claim 2, wherein said determining (S23) the third array in the regular array pairs based on the first array comprises:
determining a row starting element in each row in the irregular tensor data structure, and determining a row value corresponding to the row starting element in the first array; and
using the row value corresponding to the row starting element in the first array as the element value in the third array in order of rows, and using the array length of the first array as the last element value of the third array.

5. The sequence processing method according to claim 4, wherein when the row starting element corresponding to the current row in the third array is empty, the element value of any one of adjacent rows in the third array is used as the element value of the current row.

6. The sequence processing method according to any of claims 1-5, wherein:
prior to said determining (S11) the sequence to be processed, the method further comprises:
determining (S31) a sequence processing task, which is a task for controlling the graphics processor to perform sequence processing, and
the determining (S11) the sequence to be processed comprises:
in response to the presence of a finite state acceptor in the sequence processing task, determining (S32) a number of states in the finite state acceptor and an arc data structure corresponding to each state; and
based on the number of states and arcs corresponding to the states, representing (S33) the finite state acceptor by using a sequence with an irregular tensor data structure to obtain the sequence to be processed,
wherein the number of rows in the irregular tensor data structure is determined by the number of states, and the elements in each row are determined based on the arc data structure in the state, and
wherein the finite state acceptor comprises a set of finite states and state transitions, each of the transition has at least one label, and the arc data structure comprises a starting state, a target state, an input label, and a label weight of the current arc.

7. The sequence processing method according to claim 6, wherein the elements in each row are determined based on the arc data structure in the state by:
determining the starting state, the target state, the input label, and the label weight in the arc data structure as the elements in each row.

8. The sequence processing method according to claim 6, further comprising:
in response to the presence of a finite state transducer in the sequence processing task, generating (S44) a fourth array by using an output label of the finite state transducer as an additional attribute of the finite state acceptor,
a number of elements in the fourth array being the same as a number of arc data structures in the state acceptor.

9. The sequence processing method according to claim 6, further comprising:
creating (S55) a mapping relationship between an input label and an output label of the finite state transducer, based on the regular tensor data structure, and saving the mapping relationship.

10. A sequence processing apparatus (100), applied to a graphics processor, comprising:
a determining unit (101) configured to determine a sequence having an irregular tensor data structure as a sequence to be processed, and determine data structure information in the sequence to be processed, wherein the data structure information includes tensor dimensions and element information in tensors of each dimension;
a converting unit (102) configured to convert the irregular tensor data structure into a regular tensor data structure based on the tensor dimension and the element information; and
a processing unit (103) configured to process the sequence to be processed, based on the regular tensor data structure;
wherein the converting unit (102) is further configured to:
in response to the irregular tensor data structure including N tensor dimensions, convert the irregular tensor data structure into N-1 regular array pairs based on the element information.

11. The sequence processing apparatus according to claim 10, wherein:
prior to determining the sequence to be processed, the determining unit (101) is further configured to:
determine a sequence processing task, which is a task for controlling the graphics processor to perform sequence processing, and
the processor is configured to determine the sequence to be processed by:
in response to the presence of a finite state acceptor in the sequence processing task, determining a number of states in the finite state acceptor and an arc data structure corresponding to each state; and
based on the number of states and an arc corresponding to the state, representing the finite state acceptor by using a sequence with an irregular tensor data structure to obtain the sequence to be processed,
wherein the number of rows in the irregular tensor data structure is determined by the number of states, and the elements in each row are determined based on the arc data structure in the state, and
wherein the finite state acceptor comprises a set of finite states and state transitions, each of the transition has at least one label, and the arc data structure comprises a starting state, a target state, an input label, and a label weight of the current arc.

12. The sequence processing apparatus according to claim 11, wherein the sequence processing apparatus further comprises:
a creating unit configured to create a mapping relationship between an input label and an output label of the finite state transducer, based on the regular tensor data structure, and save the mapping relationship.

13. A non-transitory computer-readable storage medium having stored thereon instructions for execution by a processor to implement a sequence processing method according to any of claims 1-9.

## Patentansprüche

1. Sequenzverarbeitungsverfahren, angewendet auf einen Grafikprozessor, **dadurch gekennzeichnet, dass** das Verfahren die folgenden Schritte aufweist:
Bestimmen (S11) einer Sequenz mit einer unregelmäßigen Tensordatenstruktur als eine zu verarbeitende Sequenz;
Bestimmen (S12) von Datenstrukturinformationen in der zu verarbeitenden Sequenz, wobei die Datenstrukturinformationen Tensordimensionen und Elementinformationen in Tensoren jeder Dimension aufweisen;
Umwandeln (S13) der unregelmäßigen Tensordatenstruktur in eine regelmäßige Tensordatenstruktur basierend auf der Tensordimension und den Elementinformationen; und
Verarbeiten (S14) der zu verarbeitenden Sequenz basierend auf der regelmäßigen Tensordatenstruktur;
wobei das Umwandeln (S13) der unregelmäßigen Tensordatenstruktur in eine regelmäßige Tensordatenstruktur basierend auf der Tensordimension und den Elementinformationen den folgenden Schritt aufweist:
wenn die unregelmäßige Tensordatenstruktur N Tensordimensionen aufweist, Umwandeln der unregelmäßigen Tensordatenstruktur in N-1 regelmäßige Array-Paare basierend auf den Elementinformationen.

2. Sequenzverarbeitungsverfahren nach Anspruch 1, bei welchem jedes regelmäßige Array-Paar ein erstes Array und ein zweites Array und/oder ein drittes Array aufweist, wobei das Umwandeln der unregelmäßigen Tensordatenstruktur in N-1 regelmäßige Array-Paare basierend auf den Elementinformationen die folgenden Schritte aufweist:
Bestimmen (S21) einer Anzahl von Elementen in der regelmäßigen Tensordatenstruktur gemäß den Elementinformationen;
Bestimmen (S22) des ersten Arrays in den regelmäßigen Array-Paaren, wobei Elementwerte in dem ersten Array Elemente in der unregelmäßigen Tensordatenstruktur sind, und eine Array-Länge des ersten Arrays die Anzahl von Elementen in der unregelmäßigen Tensordatenstruktur ist; und
Bestimmen (S23) des zweiten Arrays und/oder des dritten Arrays in den regelmäßigen Array-Paaren basierend auf dem ersten Array,
wobei das zweite Array dazu verwendet wird, Zeileninformationen darzustellen, zu welchen jedes der Elemente in dem ersten Array in der unregelmäßigen Tensordatenstruktur gehört; und
das zweite Array dazu verwendet wird, eine Startposition der Elemente in jeder Zeile der unregelmäßigen Tensordatenstruktur in dem ersten Array und die Array-Länge des ersten Arrays darzustellen.

3. Sequenzverarbeitungsverfahren nach Anspruch 2, bei welchem das Bestimmen (S23) des zweiten Arrays in den regelmäßigen Array-Paaren basierend auf dem ersten Array die folgenden Schritte aufweist:
Bestimmen eines Zeilenwerts, zu welchem jeder Elementwert in dem ersten Array in der unregelmäßigen Tensordatenstruktur gehört; und
Verwenden des Zeilenwerts als den jeder Zeile in dem zweiten Array entsprechenden Elementwert, um ein zweites Array zu bilden, dessen Array-Länge die Anzahl von Elementen in der unregelmäßigen Tensordatenstruktur ist.

4. Sequenzverarbeitungsverfahren nach Anspruch 2, bei welchem das Bestimmen (S23) des dritten Arrays in den regelmäßigen Array-Paaren basierend auf dem ersten Array die folgenden Schritte aufweist:
Bestimmen eines Zeilenstartelements in jeder Zeile in der unregelmäßigen Tensordatenstruktur, und Bestimmen eines dem Zeilenstartelement in dem ersten Array entsprechenden Zeilenwerts; und
Verwenden des dem Zeilenstartelement in dem ersten Array entsprechenden Zeilenwerts als den Elementwert in dem dritten Array in der Abfolge der Zeilen, und Verwenden der Array-Länge des ersten Arrays als den letzten Elementwert des dritten Arrays.

5. Sequenzverarbeitungsverfahren nach Anspruch 4, bei welchem, wenn das der aktuellen Zeile in dem dritten Array entsprechende Zeilenstartelement leer ist, der Elementwert einer der benachbarten Zeilen in dem dritten Array als der Elementwert der aktuellen Zeile verwendet wird.

6. Sequenzverarbeitungsverfahren nach einem der Ansprüche 1-5, bei welchem:
das Verfahren vor dem Bestimmen (S11) der zu verarbeitenden Sequenz ferner den folgenden Schritt aufweist:
Bestimmen (S31) einer Sequenzverarbeitungsaufgabe, welche eine Aufgabe zum Steuern des Grafikprozessors zur Durchführung der Sequenzverarbeitung ist; und
das Bestimmen (S11) der zu verarbeitenden Sequenz die folgenden Schritte aufweist:
in Reaktion auf das Vorhandensein eines endlichen Akzeptors in der Sequenzverarbeitungsaufgabe, Bestimmen (S32) einer Anzahl von Zuständen in dem endlichen Akzeptor und einer jedem Zustand entsprechenden Arc-Datenstruktur; und
basierend auf der Anzahl der Zustände und den den Zuständen entsprechenden Ares, Darstellen (S33) des endlichen Akzeptors durch Verwenden einer Sequenz mit einer unregelmäßigen Tensordatenstruktur, um die zu verarbeitende Sequenz zu erhalten,
wobei die Anzahl von Zeilen in der unregelmäßigen Tensordatenstruktur durch die Anzahl der Zustände bestimmt wird, und die Elemente in jeder Zeile basierend auf der Arc-Datenstruktur in dem Zustand bestimmt werden; und
wobei der endliche Akzeptor eine Gruppe von finiten Zuständen und Zustandsübergängen aufweist, jeder Übergang mindestens ein Label aufweist, und die Arc-Datenstruktur einen Startzustand, einen Zielzustand, ein Input-Label, und ein Label-Gewicht des aktuellen Ares aufweist.

7. Sequenzverarbeitungsverfahren nach Anspruch 6, bei welchem die Elemente in jeder Zeile basierend auf der Arc-Datenstruktur in dem Zustand bestimmt werden, durch:
Bestimmen des Startzustands, des Zielzustands, des Input-Labels und des Label-Gewichts in der Arc-Datenstruktur als die Elemente in jeder Zeile.

8. Sequenzverarbeitungsverfahren nach Anspruch 6, ferner mit dem Schritt:
in Reaktion auf das Vorhandensein eines endlichen Transduktors in der Sequenzverarbeitungsaufgabe, Erzeugen (S44) eines vierten Arrays durch Verwenden eines Output-Labels des endlichen Transduktors als ein zusätzliches Attribut des endlichen Akzeptors:
wobei eine Anzahl der Elemente in dem vierten Array gleich einer Anzahl von Arc-Datenstrukturen in dem endlichen Akzeptor ist.

9. Sequenzverarbeitungsverfahren nach Anspruch 6, ferner mit dem Schritt:
Erstellen (S55) einer Mapping-Beziehung zwischen einem Input-Label und einem Output-Label des endlichen Transduktors basierend auf der regelmäßigen Tensordatenstruktur, und Speichern der Mapping-Beziehung.

10. Sequenzverarbeitungsvorrichtung (100), angewendet auf einen Grafikprozessor, mit:
einer Bestimmungseinheit (101), die zum Bestimmen einer Sequenz mit einer unregelmäßigen Tensordatenstruktur als eine zu verarbeitende Sequenz, und zum Bestimmen von Datenstrukturinformationen in der zu verarbeitenden Sequenz ausgebildet ist, wobei die Datenstrukturinformationen Tensordimensionen und Elementinformationen in Tensoren jeder Dimension aufweisen;
einer Umwandlungseinheit (102), die zum Umwandeln der unregelmäßigen Tensordatenstruktur in eine regelmäßige Tensordatenstruktur basierend auf der Tensordimesion und den Elementinformationen ausgebildet ist; und
einer Verarbeitungseinheit (103), die zum Verarbeiten der zu verarbeitenden Sequenz basierend auf der regelmäßigen Tensordatenstruktur ausgebildet ist;
wobei die Umwandlungseinheit (102) ferner dazu ausgebildet ist,
wenn die unregelmäßige Tensordatenstruktur N Tensordimensionen aufweist, die unregelmäßige Tensordatenstruktur in N-1 regelmäßige Array-Paare basierend auf den Elementinformationen umzuwandeln.

11. Sequenzverarbeitungsvorrichtung nach Anspruch 10, bei welcher
die Bestimmungseinheit (101) dazu ausgebildet ist, vor dem Bestimmen der zu verarbeitenden Sequenz:
eine Sequenzverarbeitungsaufgabe zu bestimmen, welche eine Aufgabe zum Steuern des Grafikprozessors zur Durchführung der Sequenzverarbeitung ist; und
der Prozessor dazu ausgebildet ist, die zu verarbeitende Sequenz zu bestimmen, durch
in Reaktion auf das Vorhandensein eines endlichen Akzeptors in der Sequenzverarbeitungsaufgabe, Bestimmen einer Anzahl von Zuständen in dem endlichen Akzeptor und einer jedem Zustand entsprechenden Arc-Datenstruktur; und
basierend auf der Anzahl der Zustände und den den Zuständen entsprechenden Arcs, Darstellen des endlichen Akzeptors durch Verwenden einer Sequenz mit einer unregelmäßigen Tensordatenstruktur, um die zu verarbeitende Sequenz zu erhalten,
wobei die Anzahl von Zeilen in der unregelmäßigen Tensordatenstruktur durch die Anzahl der Zustände bestimmt wird, und die Elemente in jeder Zeile basierend auf der Arc-Datenstruktur in dem Zustand bestimmt werden; und
wobei der endliche Akzeptor eine Gruppe von finiten Zuständen und Zustandsübergängen aufweist, jeder Übergang mindestens ein Label aufweist, und die Arc-Datenstruktur einen Startzustand, einen Zielzustand, ein Input-Label, und ein Label-Gewicht des aktuellen Arcs aufweist

12. Sequenzverarbeitungsvorrichtung nach Anspruch 11, bei welcher die Sequenzverarbeitungsvorrichtung aufweist:
eine Erstellungseinheit zum Erstellen einer Mapping-Beziehung zwischen einem Input-Label und einem Output-Label des endlichen Transduktors basierend auf der regelmäßigen Tensordatenstruktur, und zum Speichern der Mapping-Beziehung.

13. Nichtflüchtiges computerlesbares Speichermedium, auf welchem Befehle zur Ausführung durch einen Prozessor gespeichert sind, um ein Sequenzverarbeitungsverfahren nach einem der Ansprüche 1-9 auszuführen.

## Revendications

1. Procédé de traitement de séquence, appliqué à un processeur graphique, **caractérisé en ce que** le procédé comprend :
la détermination (S11) d'une séquence ayant une structure de données tensorielles irrégulières en guise de séquence à traiter ;
la détermination (S12) d'informations de structure de données dans la séquence à traiter, où les informations de structure de données comportent des dimensions de tenseur et des informations d'élément dans des tenseurs de chaque dimension ;
la conversion (S13) de la structure de données tensorielles irrégulières en une structure de données tensorielles régulières en fonction de la dimension de tenseur et des informations d'élément ; et
le traitement (S14) de la séquence à traiter en fonction de la structure de données tensorielles régulières ;
dans lequel ladite conversion (S13) de la structure de données tensorielles irrégulières en une structure de données tensorielles régulières en fonction de la dimension de tenseur et des informations d'élément comprend :
lorsque la structure de données tensorielles irrégulières comporte N dimensions de tenseur, la conversion de la structure de données tensorielles irrégulières en N-1 paires de matrices régulières en fonction des informations d'élément.

2. Procédé de traitement de séquence selon la revendication 1, dans lequel chaque paire de matrices régulières comporte une première matrice, et au moins l'une parmi une deuxième matrice et une troisième matrice dans lequel ladite conversion de la structure de données tensorielles irrégulières en N-1 paires de matrices régulières en fonction des informations d'élément comprend :
la détermination (S21) d'un nombre d'éléments dans la structure de données tensorielles irrégulières selon les informations d'élément ;
la détermination (S22) de la première matrice dans les paires de matrices régulières, des valeurs d'élément dans la première matrice étant des éléments dans la structure de données tensorielles irrégulières, et une longueur de matrice de la première matrice étant le nombre d'éléments dans la structure de données tensorielles irrégulières ; et
la détermination (S23) de la deuxième matrice et/ou de la troisième matrice dans les paires de matrices régulières en fonction de la première matrice,
dans lequel, la deuxième matrice est utilisée pour représenter des informations de rangée auxquelles chacun des éléments dans la première matrice appartient dans la structure de données tensorielles irrégulières ; et
la troisième matrice est utilisée pour représenter une position de départ des éléments dans chaque rangée de la structure de données tensorielles irrégulières dans la première matrice, et la longueur de matrice de la première matrice.

3. Procédé de traitement de séquence selon la revendication 2, dans lequel ladite détermination (S23) de la deuxième matrice dans les paires de matrices régulières en fonction de la première matrice comprend :
la détermination d'une valeur de rangée à laquelle chaque valeur d'élément dans la première matrice appartient dans la structure de données tensorielles irrégulières ; et
l'utilisation de la valeur de rangée en guise de valeur d'élément correspondant à chaque rangée dans la deuxième matrice pour former une deuxième matrice dont la longueur de matrice est le nombre d'éléments dans la structure de données tensorielles irrégulières.

4. Procédé de traitement de séquence selon la revendication 2, dans lequel ladite détermination (S23) de la troisième matrice dans les paires de matrices régulières en fonction de la première matrice comprend :
la détermination d'un élément de départ de rangée dans chaque rangée dans la structure de données tensorielles irrégulières, et la détermination d'une valeur de rangée correspondant à l'élément de départ de rangée dans la première matrice ; et
l'utilisation de la valeur de rangée correspondant à l'élément de départ de rangée dans la première matrice en guise de valeur d'élément dans la troisième matrice par ordre de rangées, et l'utilisation de la longueur de matrice de la première matrice en guise de dernière valeur d'élément de la troisième matrice.

5. Procédé de traitement de séquence selon la revendication 4, dans lequel lorsque l'élément de départ de rangée correspondant à la rangée actuelle dans la troisième matrice est vide, la valeur d'élément de l'une quelconque des rangées adjacentes dans la troisième matrice est utilisée en guise de valeur d'élément de la rangée actuelle.

6. Procédé de traitement de séquence selon l'une quelconque des revendications 1 à 5, dans lequel :
avant ladite détermination (S11) de la séquence à traiter, le procédé comprend en outre :
la détermination (S31) d'une tâche de traitement de séquence, qui est une tâche permettant de commander le processeur graphique pour mettre en oeuvre un traitement de séquence, et
la détermination (S11) de la séquence à traiter comprend :
en réponse à la présence d'un accepteur d'état fini dans la tâche de traitement de séquence, la détermination (S32) d'un nombre d'états dans l'accepteur d'état fini et d'une structure de données d'arc correspondant à chaque état ; et
en fonction du nombre d'états et d'arcs correspondant aux états, la représentation (S33) de l'accepteur d'état fini en utilisant une séquence avec une structure de données tensorielles irrégulières pour obtenir la séquence à traiter,
dans lequel le nombre de rangées dans la structure de données tensorielles irrégulières est déterminé par le nombre d'états, et les éléments dans chaque rangée sont déterminés en fonction de la structure de données d'arc dans l'état, et
dans lequel l'accepteur d'état fini comprend un ensemble d'états finis et de transitions d'état, chacune des transitions a au moins une étiquette, et la structure de données d'arc comprend un état de départ, un état cible, une étiquette d'entrée et un poids d'étiquette de l'arc actuel.

7. Procédé de traitement de séquence selon la revendication 6, dans lequel les éléments dans chaque rangée sont déterminés en fonction de la structure de données d'arc dans l'état par :
la détermination de l'état de départ, de l'état cible, de l'étiquette d'entrée, et du poids d'étiquette dans la structure de données d'arc en guise d'éléments dans chaque rangée.

8. Procédé de traitement de séquence selon la revendication 6, comprenant en outre :
en réponse à la présence d'un transducteur d'état fini dans la tâche de traitement de séquence, la génération (S44) d'une quatrième matrice en utilisant une étiquette de sortie du transducteur d'état fini en tant qu'attribut supplémentaire de l'accepteur d'état fini,
un nombre d'éléments dans la quatrième matrice étant le même qu'un nombre de structures de données d'arc dans l'accepteur d'état.

9. Procédé de traitement de séquence selon la revendication 6, comprenant en outre :
la création (S55) d'une relation de mappage entre une étiquette d'entrée et une étiquette de sortie du transducteur d'état fini, en fonction de la structure de données tensorielles régulières, et l'enregistrement de la relation de mappage.

10. Appareil de traitement de séquence (100), appliqué à un processeur graphique, comprenant :
une unité de détermination (101) configurée pour déterminer une séquence ayant une structure de données tensorielles irrégulières en guise de séquence à traiter, et déterminer des informations de structure de données dans la séquence à traiter, dans lequel les informations de structure de données comportent des dimensions de tenseur et des informations d'élément dans des tenseurs de chaque dimension ;
une unité de conversion (102) configurée pour convertir la structure de données tensorielles irrégulières en une structure de données tensorielles régulières en fonction de la dimension de tenseur et des informations d'élément ; et
une unité de traitement (103) configurée pour traiter la séquence à traiter, en fonction de la structure de données tensorielles régulières ;
dans lequel l'unité de conversion (102) est configurée en outre pour :
en réponse à la structure de données tensorielles irrégulières comportant N dimensions de tenseur, convertir la structure de données tensorielles irrégulières en N-1 paires de matrices régulières en fonction des informations d'élément.

11. Appareil de traitement de séquence selon la revendication 10, dans lequel :
avant détermination de la séquence à traiter, l'unité de détermination (101) est configurée en outre pour :
déterminer une tâche de traitement de séquence, qui est une tâche permettant de commander le processeur graphique pour mettre en oeuvre un traitement de séquence, et
le processeur est configuré pour déterminer la séquence à traiter par :
en réponse à la présence d'un accepteur d'état fini dans la tâche de traitement de séquence, la détermination d'un nombre d'états dans l'accepteur d'état fini et d'une structure de données d'arc correspondant à chaque état ; et
en fonction du nombre d'états et d'un arc correspondant à l'état, la représentation de l'accepteur d'état fini en utilisant une séquence avec une structure de données tensorielles irrégulières pour obtenir la séquence à traiter,
dans lequel le nombre de rangées dans la structure de données tensorielles irrégulières est déterminé par le nombre d'états, et les éléments dans chaque rangée sont déterminés en fonction de la structure de données d'arc dans l'état, et
dans lequel l'accepteur d'état fini comprend un ensemble d'états finis et de transitions d'état, chacune des transitions a au moins une étiquette, et la structure de données d'arc comprend un état de départ, un état cible, une étiquette d'entrée, et un poids d'étiquette de l'arc actuel.

12. Appareil de traitement de séquence selon la revendication 11, dans lequel l'appareil de traitement de séquence comprend en outre :
une unité de création configurée pour créer une relation de mappage entre une étiquette d'entrée et une étiquette de sortie du transducteur d'état fini, en fonction de la structure de données tensorielles régulières, et enregistrer la relation de mappage.

13. Support de stockage non transitoire lisible par ordinateur sur lequel sont stockées des instructions pour exécution par un processeur pour implémenter un procédé de traitement de séquence selon l'une quelconque des revendications 1 à 9.
